# EUROPÄISCHE PATENTSCHRIFT

(11) **EP 2 704 929 B1**
(45) Veröffentlichungstag und Bekanntmachung des Hinweises auf die Patenterteilung: **25.04.2018**
(21) Anmeldenummer: 13704062.2
(22) Anmeldetag: 07.02.2013
(51) Int. Cl.: B60S 9/06

(54) **ARRETIERMECHANISMUS**
LOCKING MECHANISM
MÉCANISME D'ARRÊT

(30) Priorität: 20.02.2012 DE 102012202528
(43) Veröffentlichungstag der Anmeldung: 12.03.2014
(73) Patentinhaber: SAF-HOLLAND GmbH, 63856 Bessenbach (DE)
(72) Erfinder: MÜLLER, Katja, 63785 Obernburg (DE)
(74) Vertreter: Müller Schupfner & Partner Patent- und Rechtsanwaltspartnerschaft mbB
(86) Internationale Anmeldenummer: PCT/EP2013/052388
(87) Internationale Veröffentlichungsnummer: WO 2013/124157

(56) Entgegenhaltungen:
- DE-U1-202006 012 472
- US-A1- 2006 202 460
- US-A1- 2007 257 243

## Beschreibung

Die vorliegende Erfindung betrifft einen Arretiermechanismus, insbesondere zum Einsatz an einer Stützwinde eines Nutzfahrzeuges.

Arretiermechanismen sind aus dem Stand der Technik insofern bekannt, dass ein Element zum Antrieb, beispielsweise eines Gewindes, in verschiedenen Stellungen arretiert werden kann. Dabei wird das entsprechende Element insbesondere in einer Ruhestellung und einer Betriebsstellung angeordnet. In der Betriebsstellung ist das Kurbelelement derart angeordnet, dass es eine Kraft oder ein Moment auf ein Getriebe oder eine ähnliche Antriebseinheit ausüben bzw. übertragen kann, mittels welchem eine Stützwinde ausgefahren wird. Dabei tritt bei aus dem Stand der Technik bekannten Antriebseinheiten für eine Stützwinde jedoch das Problem auf, dass während der Kraftübertragung auf das Element Kraftkomponenten längs der Rotationsachse auf das Getriebe einwirken können, welche eine ungünstige Belastung und Beschädigung der Zahnräder des Getriebes zur Folge haben und ein Verkanten der Getriebeeingangswelle verursachen können.

Die US 2006/202460 A1, DE 20 2006 012472 U1 und US 2007/257243 A1 offenbaren höhenverstellbare Stützen für Sattelauflieger oder dergleichen mit einem ortsfest angebrachten Stützenaußenrohr, einem darin höhenverstellbar angeordneten Stützeninnenrohr, welches über ein Getriebe antreibbar ist, das über eine Handkurbel betätigt wird. Dokument US 2006/202460 A1 offenbart den Oberbegriff des Anspruchs 1. Aufgabe der vorliegenden Erfindung ist es also, einen Arretiermechanismus bereitzustellen, welcher ein Kurbelelement in einer Position arretiert, in welcher während der Übertragung eines Antriebsmomentes keine Kraftkomponenten längs oder schräg zur Rotationsachse auftreten können.

Diese Aufgabe wird gelöst mit einem Arretiermechanismus gemäß dem Anspruch 1. Weitere Vorteile und Merkmale der vorliegenden Erfindung ergeben sich aus den abhängigen Ansprüchen.

Erfindungsgemäß umfasst der Arretiermechanismus eine Statoreinheit, eine Rotoreinheit und eine Arretiereinheit, wobei die Rotoreinheit ein Wellenelement und ein Kurbelelement aufweist, wobei das Kurbelelement schwenkbar zu dem Wellenelement angeordnet ist, wobei das Wellenelement drehbar um eine Rotationsachse gelagert und gegen Verlagerung quer zur Rotationsachse relativ zu der Statoreinheit gesichert ist, wobei in einer Ruhestellung des Kurbelelements die Arretiereinheit ausgelegt ist, das Kurbelelement in einer ersten Axialposition gegen Verlagerung längs der Rotationsachse zumindest in einer Richtung zu sichern und wobei in einer Betriebsstellung des Kurbelelements die Arretiereinheit ausgelegt ist, das Kurbelelement gegen Schwenkbewegung relativ zum Wellenelement zu sichern. Die Statoreinheit ist insbesondere bevorzugt das Gehäuse des Getriebes oder das Außenrohr einer Stützwinde eines Nutzfahrzeuges. Drehbar zu der Statoreinheit ist eine Rotoreinheit vorgesehen, wobei die Rotoreinheit ein Wellenelement und ein Kurbelelement aufweist. Das Wellenelement ist besonders bevorzugt die Antriebsachse bzw. die Eingangswelle eines Getriebes einer Stützwinde eines Nutzfahrzeuges. Das Kurbelelement ist bevorzugt ein mechanisches Hilfsmittel, um ein Antriebsmoment bzw. eine Antriebskraft auf das besagte Wellenelement zu übertragen. Insbesondere bevorzugt ist das Kurbelelement eine Handkurbel, an welcher der Benutzer einer Stützwinde eine rotierende Kraft bzw. ein Drehmoment aufbringt. Erfindungsgemäß ist das Kurbelelement schwenkbar zum Wellenelement angeordnet, wobei die Verschwenkbarkeit insbesondere ein Wegklappen des Kurbelelements, während es nicht im Einsatz ist, ermöglicht. Das Wellenelement ist drehbar um eine Rotationsachse gelagert, wobei die Rotationsachse bevorzugt senkrecht oder im Wesentlichen quer zu einer Wand der Statoreinheit ausgerichtet ist. Bevorzugt ist es weiterhin, dass die Statoreinheit eine Bohrung aufweist, durch welche das Wellenelement hindurchreicht und in welcher das Wellenelement gegen Verlagerung quer zur Rotationsachse relativ zu der Statoreinheit gesichert ist. Insbesondere bevorzugt kann es sein, dass die Aussparung bzw. die Bohrung in der Statoreinheit als Gleitlager oder Wälzlager ausgelegt ist, um ein leichtes Drehen des Wellenelements in der Aussparung der Statoreinheit zu ermöglichen. Die Arretiereinheit ist bevorzugt zumindest abschnittsweise hülsenförmig ausgebildet und an einer Seite der Statoreinheit angeordnet und wirkt so insbesondere bevorzugt als Führung des Kurbelelements und/oder des Wellenelements und als Distanzstück, welches das Kurbelelement zumindest in einer Richtung gegen Verlagerung längs der Rotationsachse relativ zur Statoreinheit sichert. Diese Sicherung des Kurbelelements gegen Verlagerung längs der Rotationsachse soll insbesondere bevorzugt in der Ruhestellung gewährleistet sein, beispielsweise, um das Kurbelelement in einer Stellung zu halten, in welcher es nicht mit dem Wellenelement in Eingriff steht. Alternativ bevorzugt ist ein mit dem Kurbelelement verbundenes Wellenelement in einer axialen Position fixiert, in welcher das Wellenelement nicht formschlüssig in ein Getriebe eingreift, in welcher also mit anderen Worten ein Leerlauf eingelegt ist. In einer zweiten Stellung des Kurbelelements, im Folgenden Betriebsstellung genannt, ist das Kurbelelement bevorzugt ausgelegt ein Drehmoment auf das Wellenelement zu übertragen, beispielsweise um das Getriebe einer Stützwinde anzutreiben. Während sich das Kurbelelement in der Betriebstellung befindet, ist eine bevorzugte Aufgabe der Arretiereinheit, das Kurbelelement gegen Schwenkbewegung relativ zum Wellenelement zu sichern. Die bevorzugt hohlkörperförmig bzw. hülsenförmig ausgelegte Arretiereinheit wird bei Vorliegen der Betriebsstellung des Kurbelelements zumindest bereichsweise über das Kurbelelement verlagert, bzw. gestülpt, um eine Schwenkbewegung des Kurbelelements relativ zur Arretiereinheit zu verhindern. Dabei ist zumindest bereichsweise ein formschlüssiger Eingriff des Kurbelelements mit der zumindest bereichsweise hülsenförmig ausgelegten Arretiereinheit gewährleistet. Bevorzugt kann es sein, dass ein hülsenförmig ausgebildeter Abschnitt der Arretiereinheit über die Gelenkstelle bzw. das Schwenkgelenk zwischen Kurbelelement und Wellenelement geschoben bzw. gestülpt wird, um Schwenkbewegungen des Kurbelelements relativ zum Wellenelement zu verhindern. Auf diese Weise kann gewährleistet werden, dass das Kurbelelement eine Rotationsbewegung im Wesentlichen exakt um die Rotationsachse ausführt und eine Kraft, die vom Anwender in einer senkrecht zur Rotationsachse stehenden Ebene auf das Kurbelelement übertragen wird, nicht zu einer Schrägstellung des Kurbelelements führt, wobei eine Belastung des Getriebes durch längs der Rotationsachse verlaufende Kraftkomponenten vermindert, bzw. verhindert wird.

Errfindungsgemäß weist die Arretiereinheit einen ersten Führungsbereich auf, welcher längs der Rotationsachse relativ zum Kurbelelement verlagerbar angeordnet ist, wobei der Führungsbereich in eine Arretierstellung zum Kurbelelement bringbar ist, in welcher das Kurbelelement gegen Verschwenkung relativ zum Wellenelement gesichert ist.

In einer ersten, bevorzugten Ausführungsform ist der erste Führungsbereich relativ zur Statoreinheit verlagerbar und kann über das Kurbelelement, ohne dass dieses längs der Rotationsachse verlagert werden muss, geschoben bzw. gestülpt werden. Um von der Betriebsstellung des Kurbelelements wieder in die Ruhestellung zu gelangen, wird zunächst die Arretiereinheit in eine Stellung verschoben, bzw. gebracht, in der sie nicht, vom Wellenelement aus gesehen, über das Schwenkgelenk zwischen Wellenelement und Kurbelelement ragt und Schwenkbewegungen des Kurbelelements wieder möglich sind. Anschließend kann das Kurbelelement wieder in die Ruhestellung geschwenkt werden. In einer alternativ bevorzugten Ausführungsform ist das Kurbelelement längs der Rotationsachse relativ zur Statoreinheit und zur Arretiereinheit verlagerbar und ist besonders bevorzugt in die Arretiereinheit einschiebbar. Weiterhin können bevorzugt auch die Arretiereinheit und das Kurbelelement längs der Rotationsachse verlagerbar relativ zueinander und relativ zur Statoreinheit angeordnet sein, wobei insbesondere bevorzugt mit Hilfe eines Rückstellelements eine Arretierstellung des ersten Führungsbereiches der Arretiereinheit gegenüber dem Kurbelelement einstellbar ist.

Bevorzugt weist die Arretiereinheit einen Stützbereich auf, welcher an der Statoreinheit festgelegt ist, um die Arretiereinheit gegen Verlagerung relativ zur Statoreinheit in zumindest einer quer zur Rotationsachse stehenden Ebene zu sichern. In einer ersten bevorzugten Ausführungsform ist der Stützbereich der Arretiereinheit ein Gleitlager bzw. eine in einem Gleitlager korrespondierende Fläche der Arretiereinheit eines Gleitlagers, welches eine Verschiebung der Arretiereinheit relativ zur Statoreinheit längs einer quer zur Rotationsachse ausgerichteten Ebene, bzw. in einer quer zur Rotationsachse ausgerichteten Ebene, verhindert. Bei dieser Ausführungsform ist die Arretiereinheit längs der Rotationsachse relativ zur Statoreinheit verlagerbar. In einer weiteren bevorzugten Ausführungsform kann der Stützbereich auch eine Fläche der Arretiereinheit sein, welche stoffschlüssig, beispielsweise mittels einer Klebe- oder Schweißverbindung, an der Statoreinheit festgelegt ist, wobei die Arretiereinheit einstückig ausgeführt sein kann und der erste Führungsbereich bevorzugt eine zylindrische Mantelfläche ist, welche das Kurbelelement in dessen Betriebsstellung stützt. Alternativ bevorzugt ist der erste Führungsbereich ein zur Statoreinheit und zum Stützbereich längs der Rotationsachse verlagerbares Element, welches bevorzugt durch den Stützbereich gegen Verlagerung quer zur Rotationsachse gestützt ist. Der Stützbereich der Arretiereinheit kann insbesondere bevorzugt auch als Flansch mit entsprechenden Aussparungen ausgebildet sein, in welche Befestigungsmittel, beispielsweise Schrauben, eingreifen, um die Arretiereinheit form- bzw. kraftschlüssig an der Statoreinheit festzulegen.

Bevorzugt ist ein Rückstellelement vorgesehen, welches bei Erreichen der Betriebsstellung des Kurbelelements den ersten Führungsbereich und das Kurbelelement in Arretierstellung zueinander bringt. Das Rückstellelement ist insbesondere bevorzugt eine Spiralfeder, welche derart angeordnet ist, dass sich ein erstes Ende der Spiralfeder an dem Stützbereich der Arretiereinheit oder der Statoreinheit abstützt und ein zweites Ende entweder am Führungsbereich der Arretiereinheit oder an einem der Elemente Kurbelelement oder Wellenelement. Dabei ist es bevorzugt, dass das Rückstellelement eine Ruhelage anstrebt, in welcher das Kurbelelement und der erste Führungsbereich der Arretiereinheit in Arretierstellung zueinander gebracht sind, d.h. in eine Stellung zueinander, in welcher der erste Führungsbereich das Kurbelelement in dessen Betriebsstellung gegen Verschwenken relativ zum Wellenelement sichert.

In einer bevorzugten Ausführungsform greift das Rückstellelement mit einem ersten Ende am Stützbereich und/oder an der Statoreinheit und mit einem zweiten Ende am ersten Führungsbereich ein, wobei es eine Rückstellkraft auf den ersten Führungsbereich überträgt, um den ersten Führungsbereich von der Statoreinheit wegzuverlagern und so in Arretierstellung zu bringen. Bevorzugt ist das Rückstellelement als Druckfeder ausgelegt, welche zwischen einer entsprechenden Eingriffsfläche des ersten Führungsbereiches und der Statoreinheit bzw. dem Stützbereich angeordnet ist und eine Ruhelage anstrebt, in welcher der Abstand des Führungsbereiches von der Statoreinheit vergrößert ist. Mit anderen Worten wird der erste Führungsbereich, um in Arretierstellung gebracht zu werden, bevorzugt von der Statoreinheit wegverlagert.

In einer alternativ bevorzugten Ausführungsform greift das Rückstellelement mit einem ersten Ende am Stützbereich und/oder an der Statoreinheit und mit einem zweiten Ende an dem Wellenelement ein, um das vorzugsweise mit dem Wellenelement gekoppelte Kurbelelement in Arretierstellung zu bringen. Das Wellenelement weist insbesondere bevorzugt einen Absatz bzw. einen Kragen auf, an welchem ein als wahlweise als Zug- oder Druckfeder ausgebildetes Rückstellelement eingreifen kann, um das Wellenelement längs der Rotationsachse zu verlagern. Dabei ist die Verlagerungsrichtung insbesondere dadurch gekennzeichnet, dass das Wellenelement das vorzugsweise mit ihm gekuppelte Kurbelelement in Betriebsstellung zieht oder drückt. Insbesondere für den Fall, dass ein dem Kurbelelement gegenüberliegendes Ende des Wellenelements ein Zahnrad aufweist, welches durch die Verlagerung längs der Rotationsachse in eine Eingriffsstellung mit einem Getriebe gebracht wird, kann es bevorzugt sein, dass bei Erreichen dieser Eingriffsstellung im Getriebe gleichzeitig das Kurbelelement in Betriebsstellung gebracht ist. Die Verlagerungsrichtung ist in diesem Fall bevorzugt eine Richtung hin zu dem Getriebe bzw. weg vom Anwender, welcher am Kurbelelement angreift.

In einer ferner bevorzugten Ausführungsform weist die Arretiereinheit einen zweiten Führungsbereich auf, welcher ausgelegt ist, das Kurbelelement in der Ruhestellung gegen Drehung um die Rotationsachse zu sichern. Um während der Ruhestellung, bspw. während des Transportzustandes des Arretiermechanismus, das Kurbelelement gegen Verdrehung um die Rotationsachse zu sichern, ist es bevorzugt, dass die Arretiereinheit einen zweiten Führungsbereich aufweist. Dieser zweite Führungsbereich kann bevorzugt als Rücksprung bzw. Aussparung quer zur Rotationsachse in die Arretiereinheit eingebracht sein. Bevorzugt schwenkt das Kurbelelement, um von seiner Betriebsstellung in die Ruhestellung gebracht zu werden, in den zweiten Führungsbereich ein, um in der Ruhestellung von dem zweiten Führungsbereich insbesondere gegen Drehbewegung um die Rotationsachse gesichert zu werden. Es kann weiterhin bevorzugt sein, eine Hinterschneidung im zweiten Führungsbereich vorzusehen, in welche das Kurbelelement unter Aufwendung einer Kraft hineingedrückt werden kann, um das Kurbelelement bevorzugt in der Ruhestellung zu fixieren. Unter Überwindung des Formschlusses durch die Hinterschneidung und unter Nutzung von elastischem Verhalten des Herstellungsmaterials von Arretiereinheit und Kurbelelement kann der Anwender anschließend durch Anlegen einer Hebelkraft am Kurbelelement dieses wieder aus der Ruhestellung in die Betriebsstellung verlagern. Insbesondere bevorzugt kann auf diese Weise während der Fahrt des Nutzfahrzeuges, das Kurbelelement in der Ruhestellung gehalten. Es kann auf diese Weise ein Klappern oder eine derart freie Bewegung des Kurbelelements vermieden werden, welche zu Beschädigungen des Kurbelelements und umliegenden Komponenten des Nutzfahrzeuges führen könnte.

In einer insbesondere bevorzugten Ausführungsform weist die Rotoreinheit zumindest ein Eingriffsmittel auf, welches mit zumindest einem Eingriffsmittel der Arretiereinheit in Eingriff bringbar ist, um die Rotoreinheit gegen Verlagerung längs der Rotationsachse zu sichern. Das Eingriffsmittel an der Rotoreinheit und das Eingriffsmittel an der Arretiereinheit greifen bevorzugt derart ineinander, dass die Rotoreinheit in einer bestimmten axialen Position längs der Rotationsachse relativ zur Arretiereinheit bzw. relativ zur Statoreinheit gesichert und dabei drehbar gelagert ist. Insbesondere bevorzugt kann auf diese Weise die Rotoreinheit in zumindest zwei axialen Positionen relativ zur Rotationsachse drehbar und gegen Verlagerung längs der Rotationsachse gesichert gelagert werden. Insbesondere bevorzugt kann dies sein, wenn die Rotoreinheit in ein Getriebe eingreift und mittels der Einstellung einer bestimmten axialen Position ein bestimmter Gang im Getriebe wählbar ist. Es kann auf diese Weise beispielsweise zwischen einem Schnellgang, bei welchem eine geringe Umdrehungszahl am Kurbelelement in eine hohe Umdrehungszahl am Getriebeausgang gewandelt wird, und einem Lastgang gewechselt werden, bei welchem eine vergleichsweise leicht gängige, hohe Drehzahl am Kurbelelement in eine niedrige Umdrehungszahl bei großem Drehmoment am Getriebeausgang gewandelt wird.

Insbesondere bevorzugt ist das Eingriffsmittel der Arretiereinheit als bereichsweise radial umlaufender Rücksprung quer zur Rotationsachse ausgebildet, wobei das Eingriffsmittel an der Rotoreinheit als zumindest bereichsweise dazu korrespondierender Vorsprung ausgebildet ist. Mit anderen Worten weist die Arretiereinheit eine radial umlaufende Nut und die Rotoreinheit einen dazu korrespondieren, beispielsweise zylinderförmigen Vorsprung auf, welcher in die umlaufende Nut eingreift. Insbesondere bevorzugt ist es, dass das Eingriffsmittel der Arretiereinheit an dem Teil der Arretiereinheit vorgesehen ist, welcher starr und längs der Axialachse unbeweglich relativ zur Statoreinheit ausgelegt ist, um auf diese Weise insbesondere bevorzugt eine axiale Position der Rotoreinheit relativ zur Statoreinheit einstellen zu können. Weiterhin bevorzugt kann es sein, dass die Arretiereinheit eine Vielzahl von radial umlaufenden Rücksprüngen aufweist, wobei dann bevorzugt zumindest ein axial verlaufender Rücksprung in der Arretiereinheit vorgesehen ist, welcher die radial verlaufenden Rücksprünge verbindet. Das Eingriffsmittel der Rotoreinheit wird in diesem axial verlaufenden Rücksprung längs der Rotationsachse geführt, bis es bei einer bestimmten axialen Position in einen radial um die Rotationsachse verlaufenden Rücksprung eingreifen kann und in dieser axialen Position drehbar gelagert ist. Um ein Verkanten des Eingriffsmittels der Rotoreinheit in den Eingriffsmitteln der Arretiereinheit zu verhindern, kann es bevorzugt sein, die Übergangsbereiche, bzw. Kreuzungsbereiche zwischen den axial verlaufenden Rücksprüngen und den radial verlaufenden Rücksprüngen der Arretiereinheit mit abgerundeten oder mit schrägen Kanten zu versehen. Das Eingriffsmittel der Rotoreinheit ist bevorzugt ein am Kurbelelement vorgesehener Zapfen. Alternativ bevorzugt kann das Eingriffsmittel der Rotoreinheit ein am Wellenelement vorgesehener Zapfen oder ein zusätzliches Element, welches das Kurbelelement und das Wellenelement verbindet, sein.

In einer besonders bevorzugten Ausführungsform steht das Kurbelelement in seiner Ruhestellung nicht in Eingriff mit dem Wellenelement. Mit anderen Worten ist das Kurbelelement, während es sich in seiner Ruhestellung befindet, nicht mechanisch mit dem Wellenelement gekoppelt, wobei gleichzeitig verhindert ist, dass ungewollte Betätigung des Kurbelelementes in der Ruhestellung zu einer Verdrehung des Wellenelementes und somit zu eventuell ungewollter Verlagerung des Getriebes bzw. des Stützfußes kommt. Insbesondere bevorzugt weist das Kurbelelement an seiner zum Wellenelement weisenden Stirnseite bevorzugt Eingriffsmittel auf, welche formschlüssig in dazu korrespondierenden Eingriffsmitteln des Wellenelementes eingreifen, um in der Betriebsstellung des Kurbelelementes ein Drehmoment auf das Wellenelement übertragen zu können. Dabei ist es insbesondere bevorzugt, dass der Formschluss zwischen Kurbelelement und Wellenelement durch eine axiale Verlagerung der beiden Elemente gegeneinander herstellbar ist. Beispielsweise weist sowohl das Kurbelelement als auch das Wellenelement jeweils eine gabelförmige Geometrie an seiner jeweils zum anderen Element weisenden Stirnseite auf. Alternativ bevorzugt weist das Kurbelelement eine sechskantförmige Geometrie auf, welche in einen innensechskantförmigen Rücksprung des Wellenelements eingreift. Insbesondere bevorzugt greift das Kurbelelement in der Ruhestellung mittels zumindest eines geeigneten Vorsprungs in zumindest einen dazu korrespondierenden Rücksprung der Arretiereinheit ein, wobei das Kurbelelement insbesondere bevorzugt längs einer durch den Rücksprung vorgegebenen Bahn zwischen der Ruhestellung und der Betriebsstellung axial verschoben wird und gleichzeitig die Verschwenkbewegung des Kurbelelements relativ zum Wellenelement ermöglicht ist. In einer weiterhin bevorzugten Ausführungsform kann das Wellenelement eine klauenförmige Geometrie aufweisen, welche in eine, eine Hinterschneidung aufweisende Geometrie des Kurbelelements eingreift und nach Schwenken des Kurbelelements in Betriebsstellung einen Formschluss bildet, welcher Drehmomente um die Rotationsachse und Kräfte längs der Rotationsachse zwischen dem Kurbelelement und dem Wellenelement überträgt. In der Ruhestellung des Kurbelelements kann besagter Formschluss leicht gelöst werden. Vorteilhaft ist die mechanische Entkopplung des Wellenelements und des Kurbelelements, während sich das Kurbelelement in seiner Ruhestellung befindet, insbesondere dadurch, dass ungewollte Verlagerung, bzw. Verdrehung, bzw. Rotation des Kurbelelements nicht zu einer ungewollten Drehbewegung des Wellenelements führt.

Alternativ bevorzugt ist es, das Kurbelelement über ein Bolzenelement schwenkbar an dem Wellenelement festzulegen. Das Bolzenelement ist dabei ein beliebiges Befestigungsmittel, welches eine drehbare bzw. verschwenkbare Befestigung des Kurbelelements und des Wellenelements aneinander ermöglicht, beispielsweise ein zylinderförmiger Bolzen. Diese Ausführungsform ist insbesondere dadurch gekennzeichnet, dass das Kurbelelement sowohl in seiner Ruhestellung als auch in seiner Betriebsstellung am Wellenelement schwenkbar festgelegt ist, wobei auch im Ruhezustand bzw. in der Ruhestellung des Kurbelelements eine Drehbewegung des Kurbelelements um die Rotationsachse auch zu einer Drehbewegung des Wellenelements führen würde. Der Vorteil dieser Auslegungsform ist jedoch, dass über das Bolzenelement eine zuverlässige und stabile mechanische Verbindung bzw. Kopplung des Kurbelelements mit dem Wellenelement und die Übertragung großer Kräfte und Drehmomente gewährleistet ist. Weiterhin kann der Nachteil der permanenten mechanischen Kopplung des Kurbelelements am Wellenelement mittels eines Verdrehschutzes des Kurbelelements in der Ruhestellung kompensiert werden. Ein solcher Verdrehschutz kann beispielsweise mittels eines oder einer Vielzahl von zweiten Führungsbereichen der Arretiereinheit hergestellt werden.

In einer weiteren bevorzugten Ausführungsform ragt das Bolzenelement derart quer zur Rotationsachse über das Wellenelement und/oder das Kurbelelement hinaus, dass es ein Eingriffsmittel der Rotoreinheit bildet. Mit anderen Worten fungieren bevorzugt die über das Wellenelement und/oder das Kurbelelement radial hinausragenden Enden des Bolzenelements gleichzeitig als wie zuvor beschriebene Eingriffsmittel der Rotoreinheit, welche wiederum in dafür vorgesehenen Eingriffsmitteln der Arretiereinheit eingreifen. Es ergibt sich hieraus folgender einfacher Ablauf des Übergangs des Kurbelelements von der Ruhestellung in die Betriebsstellung: Schwenken des Kurbelelements relativ zum Wellenelement und den Drehpunkt, welcher durch das Bolzenelement bzw. durch die drehbare bzw. schwenkbare Befestigung des Kurbelelements am Wellenelement definiert ist. Bei Erreichen der Betriebsstellung des Kurbelelements wird bevorzugt der Führungsbereich der Arretiereinheit durch das Rückstellelement oder den Anwender relativ zum Kurbelelement derart verlagert, dass das Kurbelelement in der Betriebsstellung arretiert ist. Weiterhin wird die Rotoreinheit, d.h. das Kurbelelement gemeinsam mit dem Wellenelement, entlang der Rotationsachse derart verlagert, dass das zumindest eine Eingriffsmittel der Rotoreinheit in einer dafür vorgesehenen axialen Längsnut bzw. einem dafür vorgesehenen Eingriffsmittel der Arretiereinheit in Eingriff steht, solange bis ein als umlaufende Radialnut ausgebildetes Eingriffsmittel der Arretiereinheit durch das Eingriffsmittel der Rotoreinheit erreicht ist. Greift das Eingriffsmittel der Rotoreinheit in das radial umlaufende Eingriffsmittel der Arretiereinheit ein, so ist die Rotoreinheit um die Rotationsachse und relativ zur Arretiereinheit drehbar. Während des Rotationsvorganges ist die Rotoreinheit gegen axiale Verlagerung, d.h. Verlagerung längs der Rotationsachse, relativ zur Arretiereinheit gesichert, außer in den Punkten, in welchen das Eingriffsmittel der Rotoreinheit durch den Kreuzungspunkt zwischen einer radialen Nut und einer axial verlaufenden Nut durchläuft.

In einer ferner bevorzugten Ausführungsform ist das Kurbelelement in der Betriebsstellung zumindest im Eingriffsbereich mit dem Wellenelement und/oder der Arretiereinheit kollinear zur Rotationsachse ausgerichtet. Alternativ hierzu kann die Betriebsstellung des Kurbelelements auch dadurch definiert sein, dass das Kurbelelement im Eingriffsbereich mit dem Wellenelement senkrecht zur Rotationsachse ausgerichtet ist. In diesem Falle kann das Kurbelelement als nur einfach gekrümmte Kurbel ausgebildet sein, während im eingangs beschriebenen Fall das Kurbelelement zumindest zwei Krümmungen aufweist, wobei der Abschnitt zwischen den beiden Krümmungen des Kurbelelements den Hebelarm der Kraft, welche ein Moment auf das Wellenelement überträgt, definiert.

Weitere Vorteile und Merkmale ergeben sich aus der nachfolgenden Beschreibung bevorzugter Ausführungsformen der vorliegenden Erfindung mit Bezug auf die beigefügten Figuren. Einzelne Merkmale der einzelnen Ausführungsformen können dabei im Rahmen der Erfindung miteinander kombiniert werden. Es zeigen:
- Fig. 1a: eine Schnittansicht einer bevorzugten Ausführungsform der erfindungsgemäßen Arretiervorrichtung in Ruhestellung,
- Fig. 1b: die in Fig. 1a gezeigte Ausführungsform in Betriebsstellung,
- Fig. 2a: eine Schnittansicht einer weiteren bevorzugten Ausführungsform der erfindungsgemäßen Arretiervorrichtung in Ruhestellung,
- Fig. 2b: die in Fig. 2a gezeigte Ausführungsform in Betriebsstellung,
- Fig. 3a: eine Schnittansicht einer weiteren bevorzugten Ausführungsform der erfindungsgemäßen Arretiervorrichtung in Ruhestellung,
- Fig. 3b: die in Fig. 3a gezeigte Ausführungsform in Betriebsstellung,
- Fig. 4: eine Schnittansicht einer weiteren bevorzugten Ausführungsform der erfindungsgemäßen Arretiervorrichtung in Ruhestellung,
- Fig. 5: eine Ansicht bevorzugter Ausführungsformen des ersten Führungsbereichs und des Eingriffsmittels der Arretiereinheit, und
- Fig. 6: eine Ansicht einer alternativen Ausführungsform für eine Verbindung des Wellenelements mit dem Kurbelelement zur Rotoreinheit

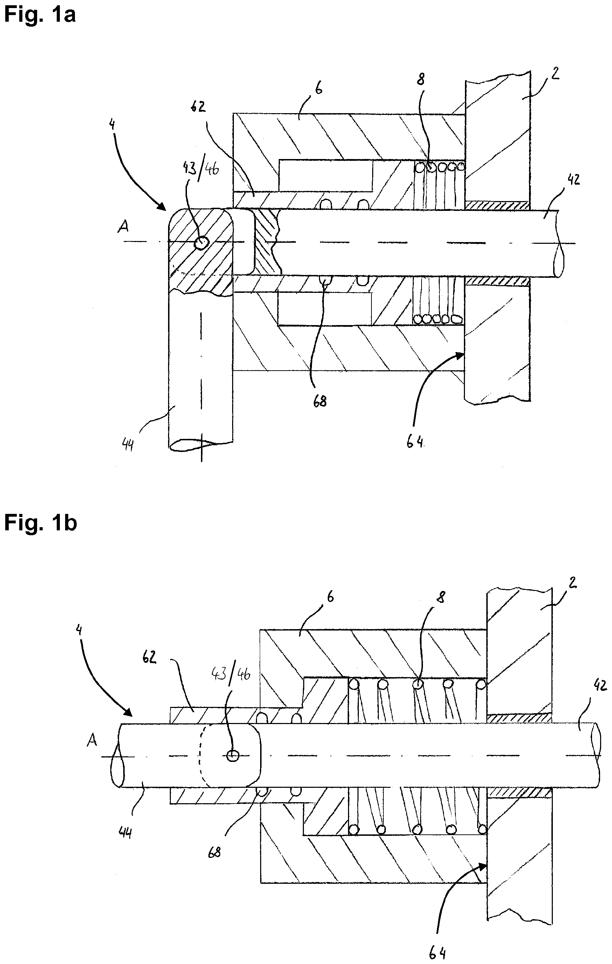

Fig. 1a zeigt eine bevorzugte Ausführungsform des erfindungsgemäßen Arretiermechanismus, insbesondere zum Einsatz in einer Stützwinde. Es sind erfindungsgemäß eine Statoreinheit 2, eine Rotoreinheit 4 und eine Arretiereinheit 6 vorgesehen, wobei die Rotoreinheit 4 ein Wellenelement 42 und ein Kurbelelement 44 aufweist. Das Wellenelement 42 ist drehbar um die Rotationsachse A gelagert und gegen Verlagerung quer zur Rotationsachse A relativ zur Statoreinheit 2 im ersten Führungsbereich 62 gesichert. Weiterhin stützt sich der erste Führungsbereich 62 über ein Rückstellelement 8 bevorzugt an der Statoreinheit 2 ab. Das Rückstellelement 8 ist bevorzugt als Spiralfeder ausgeführt. Alternativ bevorzugt kann das Rückstellelement als Elastomerteil, ausgebildet sein, beispielsweise als Gummibuchse. In der Ruhestellung des Kurbelelements 44 ist das Rückstellelement 8 bevorzugt vorgespannt. Weiterhin ist das Kurbelelement 44 durch den ersten Führungsbereich 62 nicht gegen Schwenkbewegung relativ zum Wellenelement 42 gesichert. Das Rückstellelement 8 übt eine Kraft auf den ersten Führungsbereich 62 derart aus, dass dieser über das Kurbelelement 44 geschoben wird, sobald sich das Kurbelelement 44 in seiner Betriebsstellung befindet. In der Betriebsstellung, gezeigt in Fig. 1b wird das Kurbelelement 44 durch den ersten Führungsbereich 62 gegen Schwenkbewegung relativ zum Wellenelement 42 gesichert. Um den Ausfederweg des Führungsbereichs 62 zu begrenzen, ist in der Arretiereinheit 6 bevorzugt ein Anschlag vorgesehen. Die Arretiereinheit 6 ihrerseits ist, bevorzugt stoffschlüssig, über den Stützbereich 64 mit der Statoreinheit 2 verbunden. Das Kurbelelement 44 ist mit dem Wellenelement 42 über ein bevorzugt bolzenförmiges oder zylindrisches Bolzenelement 43 formschlüssig verbunden. Bevorzugt ist das Bolzenelement 43 derart ausgeführt, dass es zumindest ein über das Wellenelement 42 und/oder das Kurbelelement 44 quer zur Rotationsachse A hinausragendes Ende aufweist, welches als Eingriffsmittel 46 verwendet werden kann, um im ersten Führungsbereich 62 formschlüssig über das Eingriffsmittel 68 geführt zu werden. Um eine axiale Verschiebung des Eingriffsmittels 46 im ersten Führungsbereich 62 zu ermöglichen, ist in diesen bevorzugt eine axial verlaufende Nut vorhanden, in welcher das Eingriffsmittel 46 geführt ist. Um eine Drehbewegung der Rotoreinheit 4 an festgelegten axialen Positionen zu ermöglichen, sind im ersten Führungsbereich 62 radial umlaufende Eingriffsmittel 68, bevorzugt quer zur Rotationsachse A ausgerichtet, und ausgelegt ein oder eine Vielzahl von Eingriffsmitteln 46 entlang einer Kreisbahn um die Rotationsachse A zu führen. Insbesondere bevorzugt sind zwei Eingriffsmittel 46 an der Rotoreinheit 4 vorgesehen und in vorteilhafter Weise einander quer zur Rotationsachse A gegenüberliegend angeordnet. Weiterhin ist bevorzugt ein zweiter Führungsbereich 66 vorgesehen, welcher in der Ruhestellung des Kurbelelements 44 eine Rotationsbewegung des Kurbelelements 44 verhindert. Der zweite Führungsbereich 66 ist bevorzugt ein Rücksprung quer zur Rotationsachse A, dessen Flanken das Kurbelelement 44 gegen Rotation um die Rotationsachse A sichern. In dem bevorzugten Fall, dass das Kurbelelement 44 in seiner Ruhestellung mit dem Wellenelement 42 gekoppelt ist, wird durch den zweiten Führungsbereich 66 die gesamte Rotoreinheit 4 gegen Rotation um die Rotationsachse gesichert. Das Eingriffsmittel 46 kann ebenfalls bevorzugt am Wellenelement 42 oder am Kurbelelement 44 befestigt oder einstückig mit diesem ausgebildet sein. Weiterhin besteht die Möglichkeit, das Eingriffsmittel 46 als Rücksprung und das Eingriffsmittel 68 als Vorsprung zu formen.

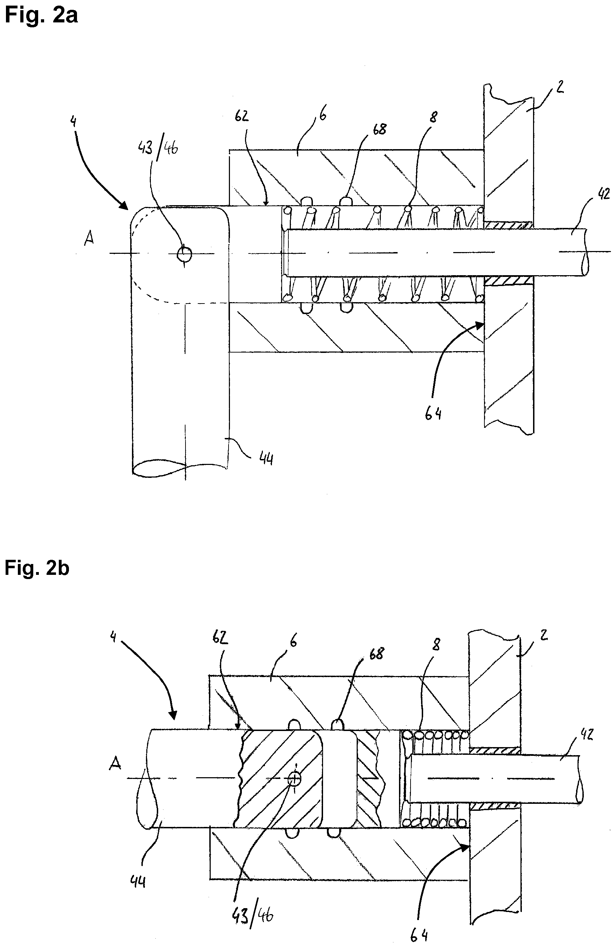

Fig. 2a zeigt eine weitere bevorzugte Ausführungsform des erfindungsgemäßen Arretiermechanismus mit einer alternativen bevorzugten Anordnung des Rückstellelements 8, ebenfalls bevorzugt ausgeführt als Spiralfeder. Das Rückstellelement 8 verbindet das Wellenelement 42 und die Statoreinheit 2 dergestalt, dass das Rückstellelement 8 in der Ruhestellung des Kurbelelements 44 vorgespannt ist. In der Betriebsstellung wird das Kurbelelement 44 durch die Federkraft des Rückstellelements 8 in den ersten Führungsbereich 62 gezogen, wobei der erste Führungsbereich 62 das Kurbelelement 44 gegen Verschwenken sichert. Um eine Drehbewegung des Rückstellelements 8 zu ermöglichen, ist an beiden Enden des Rückstellelements 8 bevorzugt eine Gleit- oder Wälzlagerung vorgesehen. Das Rückstellelement 8 ist in der in Fig. 2a dargestellten, bevorzugten Ausführung links von der Führung des Wellenelements 42 in der Statoreinheit 2 angeordnet und wird daher in der Ruhestellung des Kurbelelements 44 auf Zug belastet. Alternativ kann eine bevorzugte Ausführungsform so gestaltet sein, das Rückstellelement 8 auf der rechten Seite, mit anderen Worten auf der zu einem Getriebe hin weisenden Seite des Wellenelements 42, anzuordnen und es in der Ruhestellung des Kurbelelements 44 vorzugweise auf Druck zu belasten. Auch bei dieser Ausführungsform sind die Statoreinheit 2 und das Wellenelement 42 über das Rückstellelement 8 verbunden.

Fig. 2b zeigt die bevorzugte Ausführungsform aus Fig. 2a, wobei sich das Kurbelelement 44 in seiner Betriebsstellung befindet. Bevorzugt wird das Rückstellelement 8 derart ausgelegt, dass, soweit ein Getriebe mit mehreren Gängen vorliegt, beim Übergang von der Ruhestellung in die Betriebsstellung bereits ein Gang eingelegt wird.

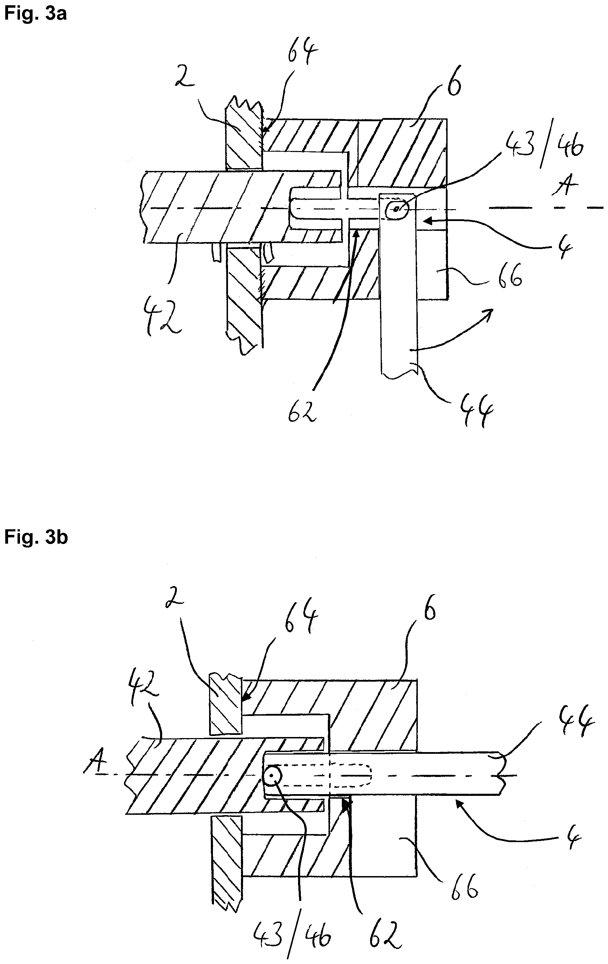

Fig. 3a zeigt eine weitere bevorzugte Ausführungsform des erfindungsgemäßen Arretiermechanismus, wobei das Kurbelelement 44 in seiner Ruhestellung nicht in Eingriff mit dem Wellenelement 42 steht. In der in Fig. 3a gezeigten Ausführungsform weist die Arretiereinheit 6 zwei, bevorzugt direkt radial gegenüberliegende Führungsnuten auf, die dazu dienen, das Kurbelelement 44 in der Ruheposition in der Arretiereinheit 6 zu halten und zu fixieren. Zusätzlich ermöglichen diese Führungsnuten eine axiale Verschiebung des Kurbelelements 44. Die Führungsnuten münden bevorzugt in radial oder axial verlaufende Eingriffsmittel der Arretiereinheit 6. Das Kurbelelement 44 wird beim Übergang in die Betriebsstellung mit einem bevorzugt gabelförmig ausgebildeten Eingriffsabschnitt in einen dazu korrespondierenden Eingriffsabschnitt des Wellenelements 42 geschoben. Über den Formschluss der Eingriffsabschnitte an Wellenelement 42 und Kurbelelement 44 kann bevorzugt ein Drehmoment übertragen werden. In dieser Position wird das Kurbelelement 44 über den ersten Führungsbereich 62 axial geführt, wie dargestellt in Fig. 3b. Das Kurbelelement 44 ist dergestalt, vorzugsweise formschlüssig mit dem Wellenelement 42 verbunden, dass eine axial feste Verbindung entsteht, die es ermöglicht, die Rotationseinheit 4 als ganzes axial zu bewegen um beispielsweise unterschiedliche Gänge in einem Getriebe zu schalten. Alternativ kann eine Fixierung bevorzugt über eine federbelastetes Kugel- oder Zylinderelement erfolgen, welches das Kurbelelement 44 im Wellenelement 42 fixiert, bzw. umgekehrt.

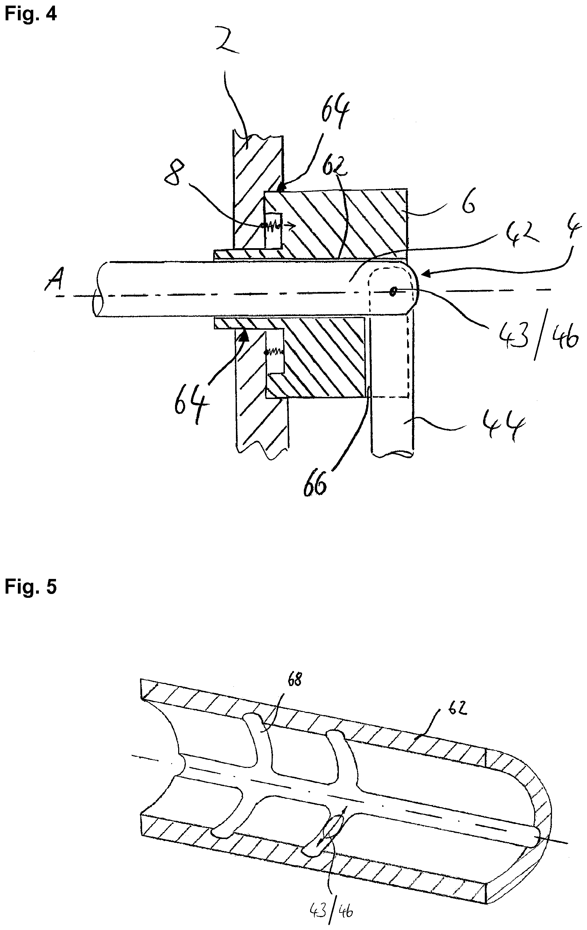

Fig. 4 zeigt eine weitere bevorzugte Ausführungsform des erfindungsgemäßen Arretiermechanismus. Die Arretiereinheit 6 wird über die Stützbereiche 64 in der Statoreinheit 2 geführt, bzw. gegen Verlagerung in zumindest jeweils einer Richtung gesichert. Die verschiedenen Stützbereiche dienen dazu, die Arretiereinheit 6 axial in der Statoreinheit 2 zu führen, sowie, während sich das Kurbelelement 44 in Ruhestellung befindet, eine Verdrehung um die Rotationsachse A relativ zur Statoreinheit 2 zu verhindern. Die Verdrehung der Arretiereinheit 6 gegenüber der Statoreinheit 2 wird vorzugsweise durch eine formschlüssige Verbindung des Stützbereiches 64 mit der Statoreinheit 2 verhindert.

Fig. 5 zeigt eine weitere bevorzugte Ausführungsform des ersten Führungsbereichs 62 mit, vorzugsweise als Rücksprünge, bzw. Nuten ausgebildeten Eingriffsmitteln 68. Die Kreuzungsstellen der axial verlaufenden Nuten mit den radial verlaufenden Nuten sind bevorzugt abgerundet oder angefast, um ein leichtes Führen des Eingriffmittels 46 zu ermöglichen und insbesondere ein Verkanten zu verhindern. Alternativ zu der in Fig. 5 gezeigten Ausführung ist vorzugsweise eine Variante auch ohne axiale Nut möglich, dadurch, dass ein Eingriffsmittel 46 bevorzugt über ein Federelement radial zur Rotationsachse A, vorzugsweise im Wellenelement 42 vorgespannt ist, solange es sich im ersten Führungsbereich 62 befindet und erst radial nach außen gleitet, wenn es das radial umlaufende Eingriffmittel 68 erreicht, wobei es in dieses formschlüssig eingreift und entlang einer Bahn um die Rotationsachse A geführt wird.

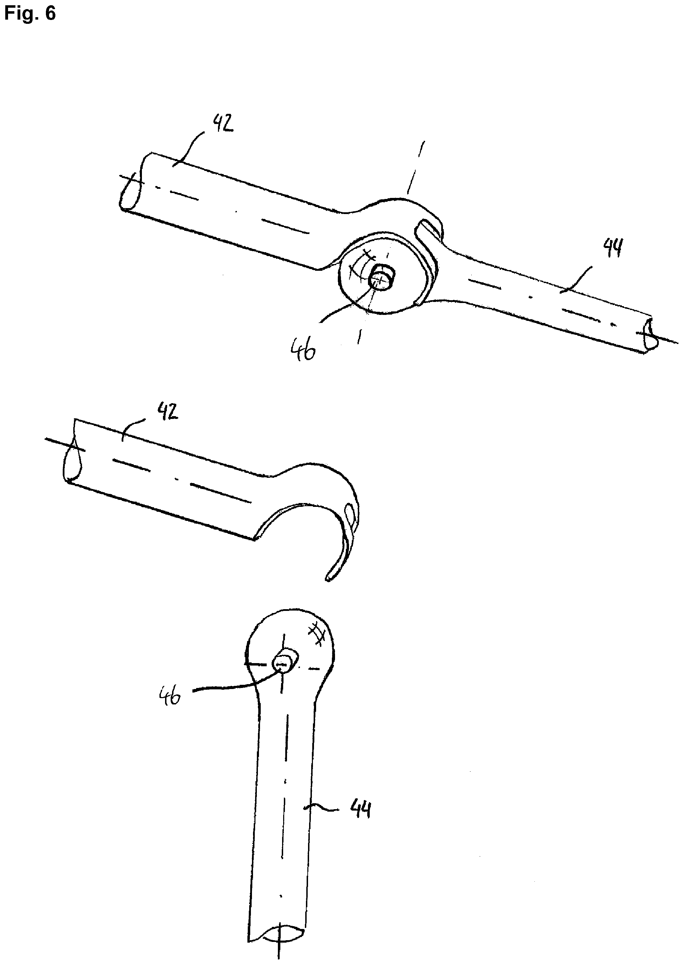

Fig. 6 zeigt eine bevorzugte Ausführungsform der Verbindung von Wellenelement 42 und Kurbelelement 44, welche eine formschlüssige Verbindung in längs der Rotationsachse A und die Übertragung von Drehmomenten ermöglicht, gleichzeitig aber eine leichte Trennung ermöglicht, wenn das Kurbelelement 44 in Ruhestellung gebracht wird.

### Bezugszeichenliste:

- 2: - Statoreinheit
- 4: - Rotoreinheit
- 6: - Arretiereinheit
- 8: - Rückstellelement
- 42: - Wellenelement
- 43: - Bolzenelement
- 44: - Kurbelelement
- 46: - Eingriffsmittel
- 62: - erster Führungsbereich
- 64: - Stützbereich
- 66: - zweiter Führungsbereich
- 68: - Eingriffsmittel
- A: - Rotationsachse

## Patentansprüche

1. Arretiermechanismus, insbesondere zum Einsatz an einer Stützwinde, umfassend
eine Statoreinheit (2), eine Rotoreinheit (4) und eine Arretiereinheit (6), wobei die Rotoreinheit (4) ein Wellenelement (42) und ein Kurbelelement (44) aufweist,
wobei das Kurbelelement (44) schwenkbar zu dem Wellenelement (42) angeordnet ist,
wobei das Wellenelement (42) drehbar um eine Rotationsachse (A) gelagert und gegen Verlagerung quer zur Rotationsachse (A) relativ zu der Statoreinheit (2) gesichert ist, wobei in einer Ruhestellung des Kurbelelements (44) die Arretiereinheit (6) ausgelegt ist, das Kurbelelement (44) in einer ersten Axialposition gegen Verlagerung längs der Rotationsachse (A) in zumindest einer Richtung zu sichern,
wobei in einer Betriebsstellung des Kurbelelements (44) die Arretiereinheit (6) ausgelegt ist, das Kurbelelement (44) gegen Schwenkbewegung relativ zum Wellenelement (42) zu sichern, **dadurch gekennzeichnet, dass** die Arretiereinheit (6) einen ersten Führungsbereich (62) aufweist, welcher längs der Rotationsachse (A) relativ zum Kurbelelement (44) verlagerbar angeordnet ist, und
wobei der Führungsbereich (62) in eine Arretierstellung zum Kurbelelement (44) bringbar ist, in welcher das Kurbelelement (44) gegen Verschwenkung relativ zum Wellenelement (42) gesichert ist.

2. Arretiermechanismus nach einem der vorhergehenden Ansprüche,
wobei die Arretiereinheit (6) einen Stützbereich (64) aufweist, welcher an der Statoreinheit (2) festgelegt ist, um die Arretiereinheit (6) gegen Verlagerung relativ zur Statoreinheit (2) in zumindest einer quer zur Rotationsachse (A) stehenden Ebene zu sichern.

3. Arretiermechanismus nach einem der vorhergehenden Ansprüche,
wobei ein Rückstellelement (8) vorgesehen ist, um bei Erreichen der Betriebsstellung des Kurbelelements (44) den ersten Führungsbereich (62) und das Kurbelelement (44) in Arretierstellung zueinander zu bringen.

4. Arretiermechanismus nach Anspruch 3,
wobei das Rückstellelement (8) mit einem ersten Ende am Stützbereich (64) und/oder an der Statoreinheit (2) und mit einem zweiten Ende am ersten Führungsbereich (62) eingreift und eine Rückstellkraft auf den ersten Führungsbereich (62) ausübt, um den ersten Führungsbereich (62) von der Statoreinheit (2) weg zu verlagern und so in Arretierstellung zu bringen.

5. Arretiermechanismus nach Anspruch 3,
wobei das Rückstellelement (8) mit einem ersten Ende am Stützbereich (64) und/oder an der Statoreinheit (2) und mit einem zweiten Ende an dem Wellenelement (42) eingreift, um das vorzugsweise mit dem Wellenelement (42) gekoppelte Kurbelelement (44) in Arretierstellung zu bringen.

6. Arretiermechanismus nach einem der vorhergehenden Ansprüche,
wobei die Arretiereinheit (6) einen zweiten Führungsbereich (66) aufweist, welcher ausgelegt ist, das Kurbelelement (44) in der Ruhestellung gegen Verdrehung um die Rotationsachse (A) zu sichern.

7. Arretiermechanismus nach einem der vorhergehenden Ansprüche,
wobei die Rotoreinheit (4) zumindest ein Eingriffsmittel (46) aufweist, welches mit zumindest einem Eingriffsmittel (68) der Arretiereinheit (6) in Eingriff bringbar ist, um die Rotoreinheit (4) gegen Verlagerung längs der Rotationsachse (A) zu sichern.

8. Arretiermechanismus nach Anspruch 7,
wobei das Eingriffsmittel (68) der Arretiereinheit (6) als bereichsweise radial umlaufender Rücksprung quer zur Rotationsachse (A) ausgebildet ist, wobei das Eingriffsmittel (46) am Wellenelement (42) und/oder am Kurbelelement (44) als dazu korrespondierender Vorsprung ausgebildet ist.

9. Arretiermechanismus nach einem der vorhergehenden Ansprüche,
wobei das Kurbelelement (44) in seiner Ruhestellung nicht in Eingriff mit dem Wellenelement (42) steht.

10. Arretiermechanismus nach einem der Ansprüche 1 bis 8,
wobei das Kurbelelement (44) an dem Wellenelement (42) schwenkbar über ein Bolzenelement (43) festgelegt ist, welches vorzugsweise derart quer zur Rotationsachse (A) über das Wellenelement (42) und/oder das Kurbelelement (44) hinausragt, dass es ein Eingriffsmittel (46) bildet.

11. Arretiermechanismus nach Anspruch 10,
wobei das Bolzenelement (43) derart quer zur Rotationsachse (A) über das Wellenelement (42) und/oder das Kurbelelement (44) hinaus, dass es ein Eingriffsmittel (46) der Rotoreinheit (4) bildet.

## Claims

1. Locking mechanism, in particular for use on a support winch, comprising
a stator unit (2), a rotor unit (4) and a locking unit (6),
wherein the rotor unit (4) has a shaft element (42) and a crank element (44),
wherein the crank element (44) is pivotably arranged in relation to the shaft element (42),
wherein the shaft element (42) is rotatably mounted about a rotation axis (A), and secured to prevent displacement transverse to the rotation axis (A) relative to the stator unit (2),
wherein, when the crank element (44) is in an idle position, the locking unit (6) is designed to secure the crank element (44) in a first axial position to prevent displacement along the rotation axis (A) in at least one direction,
wherein, when the crank element (44) is in an operating position, the locking unit (6) is designed to secure the crank element (44) to prevent swiveling movement relative to the shaft element (42)
**characterized by**,
that the locking unit (6) has a first guide portion (62) arranged along the rotation axis (A) displaceably relative to the crank element (44), and wherein the guide portion (62) may be brought into a locking position relative to the crank element (44), in which the crank element (44) is secured against a pivoting or swiveling movement relative to the shaft element (42).

2. The locking mechanism of any one of the preceding claims,
wherein the locking unit (6) has a support portion (64) which is fixed to the stator unit (2) so as to secure the locking unit (6) against displacement relative to the stator unit (2) in at least one plane standing transversely to the rotation axis (A).

3. The locking mechanism of any one of the proceeding claims,
wherein there is provided a resetting element (8) in order to bring the first guide portion (62) and the crank element (44) into a locking position relative to one another when the operating position of the crank element (44) is reached.

4. The locking mechanism of claim 3,
wherein the resetting element (8) with a first end engages at the support portion (64) and/or at the stator unit (2) and with a second end engages at the first guide portion (62) and exerts a resetting force onto the first guide portion (62) so as to displace the first guide portion (62) away from the stator unit (2) and, thus, to bring it into the locking position.

5. The locking mechanism of claim 3,
wherein the resetting element (8) with a first end engages at the support portion (64) and/or at the stator unit (2) and with a second end engages at the shaft element (42) so as to bring the crank element (44), which preferably is coupled to the shaft element (42), into the locking position.

6. The locking mechanism according to any one of the preceding claims,
wherein the locking unit (6) has a second guide portion (66) which is designed to secure the crank element (44) in the idle position against rotation about the rotation axis (A).

7. The locking mechanism of any one of the preceding claims,
wherein the rotor unit (4) has at least one engagement means (46) which may be brought into engagement with at least one engagement means (68) of the locking unit (6) so as to secure the rotor unit (4) against displacement along the rotation axis (A).

8. The locking mechanism of claim 7,
wherein the engagement means (68) of the locking unit (6) is designed as a radial circumferential recess over a certain area transverse to the rotation axis (A),
wherein the engagement means (46) is designed as a corresponding projection on the shaft element (42) and/or on the crank element (44).

9. The locking mechanism of any one of the preceding claims,
wherein the crank element (44) in its idle position is not in engagement with the shaft element (42).

10. The locking mechanism of any one of claims 1 to 8,
wherein the crank element (44) is pivotably fixed to the shaft element (42) via a pin element (43), which preferably projects beyond the shaft element (42) and/or the crank element (44) transverse to the rotation axis (A) such that it forms an engagement means (46).

11. The locking mechanism of claim 10,
wherein the pin element (43) projects beyond the shaft element (42) and/or the crank element (44) transverse to the rotation axis (A) such that it forms an engagement means (46) of the rotor unit (4).

## Revendications

1. Mécanisme d'arrêt, en particulier pour l'utilisation sur une béquille à broche filetée,
comportant
une unité stator (2), une unité rotor (4) et une unité d'arrêt (6),
dans lequel l'unité rotor (4) comprend un élément formant arbre (42) et un élément formant manivelle (44),
l'élément formant manivelle (44) est agencé mobile en pivotement par rapport à l'élément formant arbre (42),
l'élément formant arbre (42) est monté mobile en rotation autour d'un axe de rotation (A) et est bloqué par rapport à l'unité stator (2) à l'encontre d'un déplacement transversal par rapport à l'axe de rotation (A),
dans lequel
dans une position de repos de l'élément formant manivelle (44), l'unité d'arrêt (6) est conçue pour bloquer l'élément formant manivelle (44) dans une première position axiale à l'encontre d'un déplacement le long de l'axe de rotation (A) dans au moins une direction,
dans une position de fonctionnement de l'élément formant manivelle (44), l'unité d'arrêt (6) est conçue pour bloquer l'élément formant manivelle (44) à l'encontre d'un pivotement par rapport à l'élément formant arbre (42),
**caractérisé en ce que**
l'unité d'arrêt (6) comprend une première zone de guidage (62) qui est agencée mobile le long de l'axe de rotation (A) par rapport à l'élément formant manivelle (44), et
la zone de guidage (62) peut être amenée dans une position d'arrêt (44) vers l'élément formant manivelle (44), dans laquelle l'élément formant manivelle (44) est bloqué à l'encontre d'un pivotement par rapport à l'élément formant arbre (42).

2. Mécanisme d'arrêt selon l'une des revendications précédentes,
dans lequel l'unité d'arrêt (6) présente une zone d'appui (64) contre laquelle est immobilisée l'unité stator (2) pour bloquer l'unité d'arrêt (6) à l'encontre d'un déplacement par rapport à l'unité stator (2) dans au moins un plan transversal à l'axe de rotation (A).

3. Mécanisme d'arrêt selon l'une des revendications précédentes,
dans lequel est prévu un élément de rappel (8) pour amener la première zone de guidage (62) et l'élément formant manivelle (44) en position d'arrêt l'un par rapport à l'autre lorsque la position de fonctionnement de l'élément formant manivelle (44) est atteinte.

4. Mécanisme d'arrêt selon la revendication 3,
dans lequel l'élément de rappel (8) vient s'engager sur la zone d'appui (64) et/ou sur l'unité stator (2) par une première extrémité et sur la première zone de guidage (62) par une seconde extrémité, et exerce une force de rappel sur la première zone de guidage (62) afin de déplacer la première zone de guidage (62) en éloignement de l'unité stator (2) et de l'amener ainsi jusqu'à la position d'arrêt.

5. Mécanisme d'arrêt selon la revendication 3,
dans lequel l'élément de rappel (8) vient s'engager sur la zone d'appui (64) et/ou sur l'unité stator (2) par une première extrémité et sur l'élément formant arbre (42) par une seconde extrémité afin de déplacer l'élément formant manivelle (44) couplé de préférence à l'élément formant arbre (42) jusqu'à la position d'arrêt.

6. Mécanisme d'arrêt selon l'une des revendications précédentes,
dans lequel l'unité d'arrêt (6) comprend une seconde zone de guidage (66) qui est conçue pour bloquer l'élément formant manivelle (44) à l'encontre d'une rotation autour de l'axe de rotation (A) dans la position de repos.

7. Mécanisme d'arrêt selon l'une des revendications précédentes,
dans lequel l'unité rotor (4) comprend au moins un moyen d'engagement (46) qui est susceptible d'être amené en engagement avec au moins un moyen d'engagement (68) de l'unité d'arrêt (6), afin de bloquer l'unité rotor (4) à l'encontre d'un déplacement le long de l'axe de rotation (A).

8. Mécanisme d'arrêt selon la revendication 7,
dans lequel le moyen d'engagement (68) de l'unité d'arrêt (6) est réalisé sous la forme d'un retrait s'étendant en partie radialement transversalement à l'axe de rotation (A), le moyen d'engagement (46) étant réalisé sous forme de saillie correspondante sur l'élément formant arbre (42) et/ou sur l'élément formant manivelle (44).

9. Mécanisme d'arrêt selon l'une des revendications précédentes,
dans lequel, dans sa position de repos, l'élément formant manivelle (44) n'est pas en engagement avec l'élément formant arbre (42).

10. Mécanisme d'arrêt selon l'une des revendications 1 à 8,
dans lequel l'élément formant manivelle (44) est monté mobile en pivotement sur l'élément formant arbre (42) par un élément boulon (43) qui dépasse de préférence au-delà de l'élément formant arbre (42) et/ou de l'élément formant manivelle (44) transversalement à l'axe de rotation (A) de manière à former un moyen d'engagement (46).

11. Mécanisme d'arrêt selon la revendication 10,
dans lequel l'élément boulon (43) dépasse au-delà de l'élément formant arbre (42) et/ou de l'élément formant manivelle (44) transversalement à l'axe de rotation (A) de manière à former un moyen d'engagement (46) de l'unité rotor (4).
